(19) Europäisches Patentamt
European Patent Office
Office européen des brevets

(11) **EP 1 481 153 B1**

(12) **EUROPÄISCHE PATENTSCHRIFT**

(45) Veröffentlichungstag und Bekanntmachung des Hinweises auf die Patenterteilung:
**02.05.2012 Patentblatt 2012/18**

(21) Anmeldenummer: **04700126.8**

(22) Anmeldetag: **05.01.2004**

(51) Int Cl.:
*F02D 41/00* *(2006.01)*    *F02D 13/02* *(2006.01)*

(86) Internationale Anmeldenummer:
**PCT/EP2004/000031**

(87) Internationale Veröffentlichungsnummer:
**WO 2004/067938 (12.08.2004 Gazette 2004/33)**

(54) **VERFAHREN ZUM STEUERN EINER BRENNKRAFTMASCHINE**

METHOD FOR OPERATION OF AN INTERNAL COMBUSTION ENGINE

PROCEDE DE COMMANDE D'UN MOTEUR A COMBUSTION INTERNE

(84) Benannte Vertragsstaaten:
**DE FR GB**

(30) Priorität: **30.01.2003 DE 10303699**

(43) Veröffentlichungstag der Anmeldung:
**01.12.2004 Patentblatt 2004/49**

(73) Patentinhaber: **Continental Automotive GmbH**
**30165 Hannover (DE)**

(72) Erfinder:
• **HENN, Michael**
  **38165 Lehre (DE)**
• **JEHLE, Martin**
  **93051 Regensburg (DE)**
• **ZHANG, Hong**
  **93105 Tegernheim (DE)**

(56) Entgegenhaltungen:
WO-A-97/35106     DE-A- 10 039 785
DE-A- 19 615 542     US-A- 5 293 553

**Beschreibung**

Die Erfindung betrifft ein Verfahren zum Steuern einer Brennkraftmaschine mit einem Ansaugtrakt, der mindestens ein Saugrohr hin zu einem Einlasskanal je Zylinder der Brennkraftmaschine umfasst, mit mindestens einem Abgaskanal je Zylinder der Brennkraftmaschine, mit mindestens einem ersten Stellglied, dass in einem Saugrohr oder einem Einlasskanal oder einem Abgaskanal angeordnet ist und den Gaswechsel in dem jeweiligen Zylinder beeinflusst, mit weiteren Stellgliedern, die auf die Brennkraftmaschine einwirken und mit Sensoren, die Messwerte von Messgrößen erfassen.

Aus der WO 97/35106 ist ein Verfahren zum Steuern einer Brennkraftmaschine bekannt. Bei dem Verfahren werden verschiedene Schätzgrößen, wie der Saugrohrdruck, der Massenstrom in dem Ansaugtrakt im Bereich der Drosselklappe, der Massenstrom in die Zylinder der Brennkraftmaschine und der Abgasgegendruck mittels eines Beobachters ermittelt. Ein Beobachter kann jeweils Schätzwerte bestimmter Größen, d.h. Schätzgrößen, eines Systems, hier der Brennkraftmaschine, ermitteln abhängig von erfassten Messgrößen oder weiteren Schätzwerten. Dies erfolgt durch entsprechende Modellbildung des Systems der Brennkraftmaschine. So können mehr Größen zur Steuerung der Brennkraftmaschine herangezogen werden, als diese von Sensoren erfasst werden. Im Hinblick auf niedrige Abgas-Emissionen der Brennkraftmaschine ist es notwendig, dass alle Größen - also auch die Schätzgrößen - sehr genau ermittelt werden.

Die Aufgabe der Erfindung ist es, das bekannte Verfahren zum Steuern einer Brennkraftmaschine zu verbessern. Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich dadurch aus, dass die Stellung des bzw. der ersten Stellglieder variiert wird und in vorgegebenen angesteuerten Stellungen Messgrößen zum Ermitteln einer ersten und weiteren Schätzgröße erfasst werden, wobei die erste und/oder weitere Schätzgröße abhängig von einem Schätzwert oder einem Messwert der Stellung des bzw. der ersten Stellglieder und einem Korrekturwert für den Schätzwert oder Messwert der Stellung ermittelt werden. Ein Optimierungsverfahren wird durchgeführt, mittels dessen Abweichungen der ersten Schätzgröße von der weiteren Schätzgröße für alle vorgegebenen angesteuerten Stellungen minimiert werden durch ein Anpassen des Korrekturwerts für den Schätzwert oder Messwert der Stellung. Im weiteren Betrieb der Brennkraftmaschine wird mindestens eine Stellgröße zum Steuern des oder der ersten und/oder der weiteren Stellglieder abhängig von mindestens einer Schätzgröße ermittelt wird, die abhängig von einem Schätzwert oder einem Messwert der Stellung des bzw. der ersten Stellglieder und auch abhängig von dem Korrekturwert für den Schätzwert oder Messwert der Stellung ermittelt wird.

Dadurch kann auf einfache Weise gewährleistet werden, dass trotz Fertigungsungenauigkeiten des bzw. der ersten Stellglieder und Ungenauigkeiten in der Erfassung des Schätzwertes oder Messwertes der Stellung des bzw. der ersten Stellglieder eine sehr präzise Ermittlung der weiteren Schätzgröße und der sonstigen Schätzgröße möglich ist. Die Korrektur des Schätzwertes oder Messwertes der Stellung des bzw. der ersten Stellglieder erfolgt somit individuell für die Gegebenheiten der jeweiligen Brennkraftmaschine. Dadurch kann auch eine höhere Fertigungstoleranz bei den ersten Stellgliedern inklusive der zugeordneten Stellantriebe und der ggf. die Stellung erfassenden Sensoren ohne Einbuße an Genauigkeit bei der Ermittlung der Schätzgrößen akzeptiert werden.

Die genannten Vorteile sind auch dann vorhanden, wenn die Stellung des bzw. der ersten Stellglieder variiert wird und in vorgegebenen angesteuerten Stellungen eine erste Messgröße erfasst wird und mindestens eine weitere Messgröße zum Ermitteln einer weiteren Schätzgröße erfasst wird, wobei die weitere Schätzgröße abhängig von einem Schätzwert oder einem Messwert der Stellung des bzw. der ersten Stellglieder und einem Korrekturwert für den Schätzwert oder Messwert der Stellung ermittelt wird. Es wird ein Optimierungsverfahren durchgeführt, mittels dessen Abweichungen der ersten Messgröße von der weiteren Schätzgröße für alle vorgegebenen angesteuerten Stellungen minimiert werden durch ein Anpassen des Korrekturwerts für den Schätzwert oder Messwert der Stellung. Im weiteren Betrieb der Brennkraftmaschine werden alle Schätzgrößen, die abhängig von einem Schätzwert oder einem Messwert der Stellung des bzw. der ersten Stellglieder ermittelt werden auch abhängig von dem Korrekturwert für den Schätzwert oder Messwert der Stellung ermittelt.

In einer vorteilhaften Ausgestaltung der Erfindung wird in einem stationären Betriebszustand der Brennkraftmaschine die Stellung des bzw. der ersten Stellglieder variiert wird und in den vorgegebenen Stellungen werden die Messgrößen ermittelt. Dies hat den Vorteil, dass in einem stationären Betriebszustand gewährleistet ist, dass der bzw. die Korrekturwerte genau und zuverlässig ermittelt werden. Durch eine geeignete Wahl der Stellungen, in denen Wertepaare der Schätzgröße oder Messgröße und der weiteren Schätzgröße ermittelt werden, kann eine sehr gute Konvergenz des Optimierungsverfahrens gewährleistet werden.

In einer weiteren vorteilhaften Ausgestaltung ist der stationäre Betriebszustand der Leerlauf oder das Schubabschalten. Dies hat den Vorteil, dass die Ermittlung des oder der Korrekturwerte keinen Einfluss auf das Fahrverhalten der Brennkraftmaschine hat und so vom Fahrer nahezu unbemerkt durchgeführt werden kann und dabei keine nennenswerten Emissionen erzeugt werden.

Ausführungsbeispiele der Erfindung werden im Folgenden anhand der schematischen Zeichnungen erläutert. Es zeigen:

Figur 1 eine Brennkraftmaschine,

Figur 2 einen Verstellantrieb für die Nockenwelle der Brennkraftmaschine,

Figur 3- Ventilerhebungskurven von Gaseinlass- und Gasauslassventilen der Brennkraftmaschine,

Figur 4,5 einen ersten bzw. zweiten Teil eines Ablaufdiagramms zum Steuern der Brennkraftmaschine,

Figur 6,7 eine alternative Ausgestaltung eines ersten und bzw. zweiten Teils eines Ablaufdiagramms eines Programms zum Steuern der Brennkraftmaschine

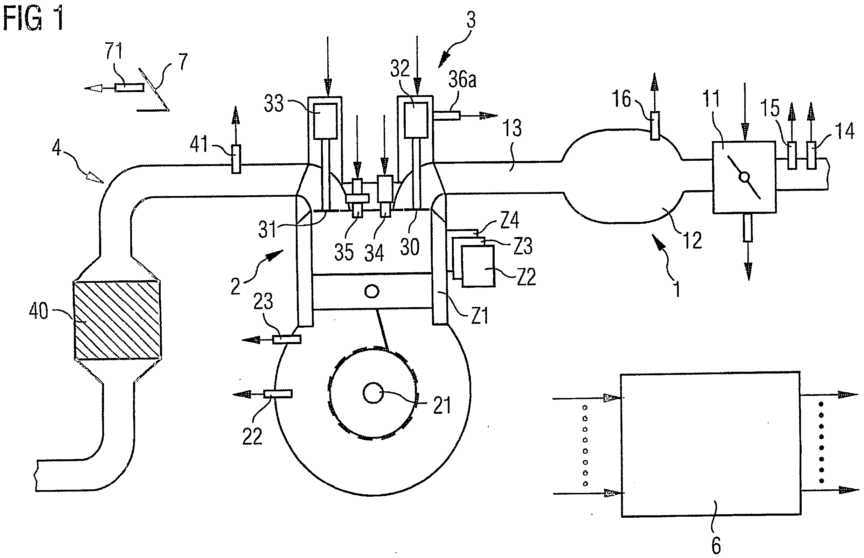

Elemente gleicher Konstruktion und Funktion sind figurenübergreifend mit den gleichen Bezugszeichen gekennzeichnet. Eine Brennkraftmaschine (siehe Figur 1) umfasst einen Ansaugtrakt 1, einen Motorblock 2, einen Zylinderkopf 3 und einen Abgastrakt 4. Der Ansaugtrakt umfasst vorzugsweise eine Drosselklappe 11, ferner einen Sammler 12 und ein Saugrohr 13, das hin zu einem Zylinder Z1 über einen Einlasskanal in dem Motorblock 2 geführt ist. Der Motorblock umfasst ferner eine Kurbelwelle 21, welche über eine Pleuelstange mit dem Kolben des Zylinders Z1 gekoppelt ist.

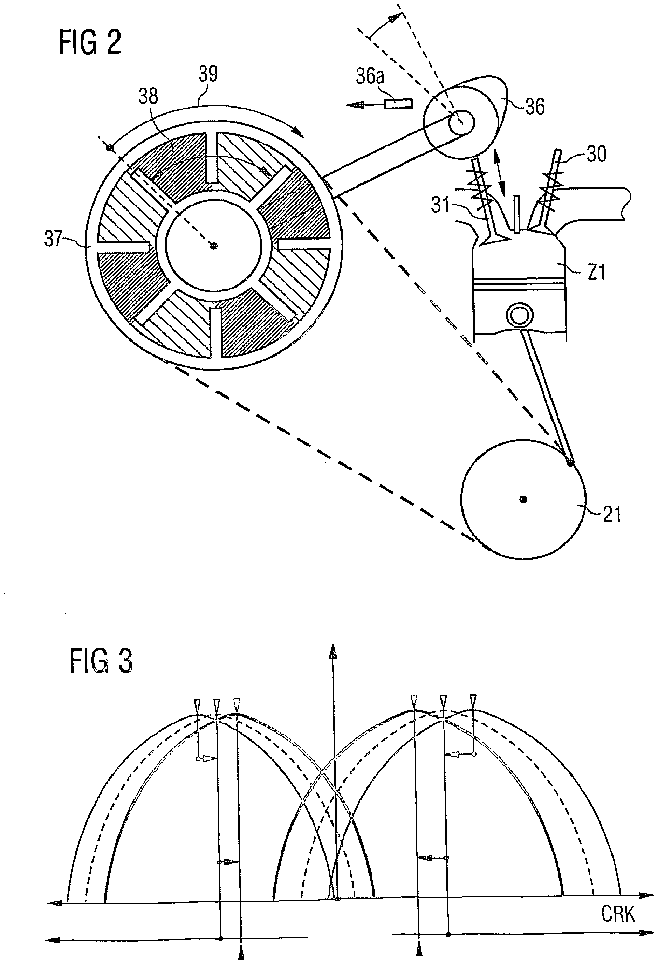

Der Zylinderkopf umfasst einen Ventiltrieb mit einem Einlassventil 30, einem Auslassventil 31 und Ventilantrieben 32, 33. Der Antrieb des Gaseinlassventils 30 und des Gasauslassventils 31 erfolgt dabei vorzugsweise mittels einer Nockenwelle 36 (siehe Figur 3) oder ggf. mittels zweier Nockenwellen, wobei je eine dem Gaseinlassventil 30 und dem Gasauslassventil 31 zugeordnet ist. Der Antrieb für das Gaseinlassventil 30 und/oder das Gasauslassventil 31 umfasst vorzugsweise neben der Nockenwelle 36 einen Verstellantrieb 37, der einerseits mit der Nockenwelle 36 und andererseits mit der Kurbelwelle 21 gekoppelt ist. Mittels des Verstellantriebs kann die Phase zwischen der Kurbellwelle 21 und der Nockenwelle 36 verstellt werden. Dies erfolgt im vorliegenden Ausführungsbeispiel durch Erhöhen des Drucks in den Hochdruckkammern 38 des Verstellantriebs 37 bzw. Erniedrigen des entsprechenden Drucks je nachdem in welche Richtung die Verstellung erfolgen soll. Der mögliche Verstellbereich ist in Figur 3 mit dem Pfeil 39 gekennzeichnet.

Durch Ungenauigkeiten in der Fertigung und Montage des Verstellantriebs oder der Nockenwelle 36 oder des Nockenwellensensors 36a können sich Ungenauigkeiten in der Phasenverschiebung zwischen Nockenwelle 36 und Kurbelwelle 21 ergeben. Dies wird anhand von Figur 3 erläutert, in der die Ventilerhebungskurven des Gaseinlassventils 30 und des Gasauslassventils 30, 31 über den Kurbelwellenwinkel aufgetragen sind. Dabei zeigen die fett gezeichneten Erhebungskurven die momentane Position des Verstellantriebs, die gestrichelte Ventilerhebungskurve die Stellung bei dem mechanischen Anschlag, falls dieser keine Toleranz aufweist, und die dünn durchgezogene Linie die Ventilerhebungskurve beim mechanischen Anschlag, falls dieser eine tatsächliche Toleranz aufweist.

Der Zylinderkopf 3 (Figur 1) umfasst ferner ein Einspritzventil 34 und eine Zündkerze 35. Alternativ kann das Einspritzventil auch in dem Ansaugkanal 13 angeordnet sein.

In dem Abgastrakt 4 ist ein Katalysator 40 angeordnet. Ferner ist eine Steuereinrichtung 6 vorgesehen, der Sensoren zugeordnet sind, die verschiedene Messgrößen erfassen. Die Steuereinrichtung 6 ermittelt abhängig von mindestens einer der Messgrößen Stellgrößen, die dann in Stellsignale zum Steuern der Stellglieder mittels entsprechender Stellantriebe umgesetzt werden.

Die Sensoren sind ein Pedalstellungsgeber 71, welcher die Stellung eines Fahrpedals 7 erfasst, ein Luftmassenmesser 14, welcher einen Luftmassenstrom stromaufwärts der Drosselklappe 11 erfasst, ein Temperatursensor, welcher die Ansauglufttemperatur $T\_IM$ erfasst, ein Drucksensor 16, welcher den Saugrohrdruck $P\_IM$ erfasst, ein Kurbelwellenwinkelsensor 22, welcher einen Kurbelwellenwinkel erfasst, welchem dann eine Drehzahl N zugeordnet wird, ein weiterer Temperatursensor 23, welcher eine Kühlmitteltemperatur erfasst, ein Nockenwellensensor 36, welcher den Nockenwellenwinkel CRK erfasst und eine Sauerstoffsonde 41, die den Restsauerstoffgehalt des Abgases in dem Abgastrakt 4 erfasst und diesem eine Luftzahl zuordnet. Je nach Ausführungsform der Erfindung kann eine beliebige Untermenge der genannten Sensoren oder auch zusätzliche Sensoren vorhanden sein.

Die Stellglieder sind beispielsweise die Drosselklappe 11, die Gaseinlass- und Gasauslassventile 30,31, das Einspritzventil 34, die Zündkerze 35. Sie werden mittels elektrischer, elektromechanischer, hydraulischer, mechanischer, Piezo oder weiterer dem Fachmann bekannter Stellantriebe angesteuert. Im Folgenden wird auf die Stellantriebe und Stellglieder mit Stellglieder bezug genommen.

Neben dem detailliert dargestellten Zylinder Z1, sind in der Brennkraftmaschine in der Regel noch weitere Zylinder Z2-Z4 vorhanden, denen dann entsprechende Saugrohre, Abgaskanäle und Stellglieder zugeordnet sind.

Beobachtergleichungen für verschiedene Größen der Brennkraftmaschine können mittels auf physikalischen Ansätzen basierenden modellgestützten Berechnungsmethoden aufgestellt werden. Diesen Berechnungsgleichungen liegen die Massenbilanzen der Massenströme im Ansaugtrakt und die Gasgleichungen zugrunde.

So kann beispielsweise für den Luftmassenstrom in dem Ansaugtrakt im Bereich der Drosselklappe folgende Beziehung angesetzt werden:

$$\dot{m}_{thr} = C_1(T_{im}) \cdot A_{red}(\alpha_{thr}) \cdot p_{thr} \cdot \psi\left(\frac{p_{im}}{p_{thr}}\right) \qquad \text{(F1)}$$

mit

$\dot{m}$ thr Luftmassenstrom im Bereich der Drosselklappe,

$C_1(T_{im})$ ein erster Faktor $C_1$ abhängig von der Temperatur im Ansaugtrakt,

$A_{red}$ der reduzierte Strömungsquerschnitt an der Drosselklappe, $\alpha_{thr}$ der Öffnungsgrad der Drosselklappe,

$p_{thr}$ der Druck stromaufwärts der Drosselklappe, der im Wesentlichen dem Umgebungsdruck entspricht,

$p_{im}$ der Druck im Ansaugtrakt, also der Saugrohrdruck.

Für den Luftmassenstrom in den Zylinder der Brennkraftmaschine lässt sich ferner folgende Beziehung aufstellen:

$$\dot{m}_{cyl} = \eta_s(N, ES) \cdot p_{im} - \eta_{o1}(N, VO) \qquad \text{(F2)}$$

oder

$$\dot{m}_{cyl} = \eta_s(N, ES) \cdot p_{im} - \eta_{o2}(N, AS) \qquad \text{(F3)}$$

$\dot{m}$ cyl der Luftmassenstrom in dem Zylinder ist,

$\eta_s$ (N, ES) eine Funktion abhängig von der Drehzahl und dem Einlass-Schließt-Winkel ES des Gaseinlassventils 30 ist,

$\eta_{o1}$ (N,VO) eine weitere Funktion abhängig von der Drehzahl und der Ventilüberschneidungsdauer VO zwischen den Gaseinlassventil und dem Gasauslassventil 31 ist und

$\eta_{o2}$(N, AS) eine weitere Funktion abhängig von der Drehzahl und dem Auslass-Schließt-Winkel AS sind. Dabei können in der Steuereinrichtung der Brennkraftmaschine die Funktionen $\eta_s$, $\eta_{o1}$ und $\eta_{o2}$ in Form von Kennfeldern abgelegt sein.

Entsprechende Modellgleichungen für den Luftmassenstrom in dem Zylinder, dem Massenstrombereich der Drosselklappe und auch weitere Gleichungen wie für den Saugrohrdruck, den Abgasgegendruck, die Abgastemperatur oder einen Restgasmassenstrom und deren Herleitung sind in der WO 97/35106 offenbart, der mit deren Inhalt hiermit diesbezüglich einbezogen wird.

Ein Beobachter ermittelt mittels derartiger Modellgleichungen nicht direkt der Messung zugängliche Größen als Schätzgrößen.

Ausführungsbeispiele von Programmen zum Steuern der Brennkraftmaschine werden im Folgenden anhand der nachfolgenden Figuren beschrieben.

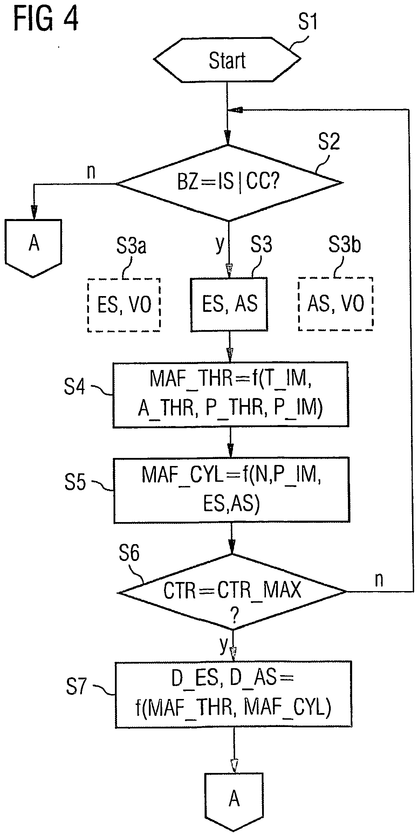

Das Programm wird in einem Schritt S1 (siehe Figur 4) gestartet. In einem Schritt S2 wird geprüft, ob die Brennkraftmaschine sich in einem Betriebszustand BZ befindet, der der Leerlauf IS oder die Schubabschaltung CC ist. Diese Betriebszustände zeichnen sich dadurch aus, dass sie zum einen stationäre Betriebszustände sind mit der Folge, dass der Luftmassenstrom im Bereich der Drosselklappe 11 gleich ist dem Luftmassenstrom in die Zylinder Z1 bis Z4 der Brennkraftmaschine und sich ein Verändern der Stellung des oder der Stellglieder zum Beeinflussen des Gaswechsels in dem jeweiligen Zylinder sich nicht auf den Fahrbetrieb auswirkt und damit für den Fahrer nicht mehr spürbar ist und durch das Verstellen auch keine wesentlichen zusätzlichen Emissionen erzeugt werden.

Falls die Bedingung des Schrittes S2 nicht erfüllt ist, so wird die Bearbeitung in den an den Verknüpfungspunkt A folgenden Schritt fortgesetzt. Ist die Bedingung des Schrittes S2 jedoch erfüllt, so wird in einem Schritt S3 die Stellung des bzw. der ersten Stellglieder variiert. In dem Schritt S3 wird beispielsweise der Einlass-Schließt-Winkel ES des Gaseinlassventils 30 um einen vorgegebenen Wert verändert und ebenso der Auslass-Schließt-Winkel AS des Gasauslassventils 35 um einen vorgegebenen Winkel variiert. Dies kann bei mehreren Durchläufen des Schrittes S3 beispielsweise mit gleicher Schrittweite oder einer vorteilhaft gewählten anderen veränderlichen Schrittweite beispielsweise über den gesamten Verstellbereich des Verstellantriebs 37 erfolgen. Alternativ können auch nur vorgegebene Punkte des Verstellbereichs eingestellt werden.

In einem Schritt S4 wird dann anschließend ein Luftmassenstrom MAF_THR in dem Ansaugtrakt 1 im Bereich der Drosselklappe 11 mittels eines Beobachters ermittelt. Dies erfolgt abhängig von der Ansauglufttemperatur T_IM, dem Öffnungsgrad der Drosselklappe A_THR, dem Umgebungsdruck P_THR und dem Saugrohrdruck P_IM. Der Umgebungsdruck P_THR kann dabei einfach in einem Betriebszustand mit nahezu vollständig geöffneter Drosselklappe 11 aus dem von dem Saugrohrdrucksensor 16 erfassten Saugrohrdruck P_IM ermittelt werden. Bei dem Saugrohrdruck P_IM handelt es sich um eine Messgröße. Die Messgrößen werden der jeweils angesteuerten Stellung des bzw. der ersten Stellglieder zugeordnet und zwischengespeichert.

In einem Schritt S5 wird als weitere Schätzgröße der Luftmassenstrom MAF_CYL in die Zylinder Z1 bis Z4 der Brennkraftmaschine mittels eines weiteren Beobachters ermittelt. Dies erfolgt abhängig von der Drehzahl N, dem Saugrohrdruck P_IM, dem Einlass-Schließt-Winkel ES und dem Auslass-Schließt-Winkel AS des Gaseinlassventils 30 bzw. des Gasauslassventils 31. Der Einlass-Schließt-Winkel ES und der Auslass-Schließt-Winkel AS ist auf die mechanische Referenzposition des Verstellantriebs 37 bezogen ohne Fertigungstoleranz. Der Einlass-Schließt-Winkel ES bzw. Auslass-Schließt-Winkel AS wird abhängig von den Messgrößen Kurbelwellenwinkel CRK und Nockenwellenwinkel ermittelt und kann somit von einem tatsächlichen Einlass-Schließt-Winkel bzw. Auslass-Schließt-Winkel abweichen. Die Messgrößen werden der jeweils angesteuerten Stellung des bzw. der ersten Stellglieder zugeordnet und zwischengespeichert.

In einem Schritt S6 wird dann geprüft, ob ein Zähler CTR einen Maximalwert CTR_MAX hat, der beispielsweise den Wert 50 hat und bei dem dann gewährleistet ist, dass alle den vorgegebenen angesteuerten Stellungen des bzw. der ersten Stellglieder zugeordneten Messgrößen zum Ermitteln der ersten und zweiten Schätzgröße in den Schritten S4 und S5 bei aufeinanderfolgenden Durchläufen ermittelt wurden. Ist die Bedingung des Schrittes S6 nicht erfüllt, so wird die Bearbeitung erneut in dem Schritt S2 fortgesetzt. Ist die Bedingung des Schrittes S6 jedoch erfüllt, so wird die Bearbeitung in dem Schritt S7 fortgesetzt.

In einem Schritt S7 werden ein erster Korrekturwert D_ES für den Einlass-Schließt-Winkel ES und ein zweiter Korrekturwert D_AS für den Auslass-Schließt-Winkel AS mittels eines Optimierungsverfahrens ermittelt. Dabei wird vorzugsweise als Gütefunktion der quadratische Fehler angesetzt. Dies erfolgt mittels der bei den jeweiligen Durchläufen der Schritte S4 und S5 ermittelten Messgrößen zum Ermitteln der Schätzgrößen Luftmassenstrom MAF_THR im Ansaugtrakt 1 im Bereich der Drosselklappe 11 und dem Luftmassenstrom MAF_CYL in die Zylinder Z1 bis Z4 und der dem jeweiligen Durchlauf zugeordneten Stellung des ersten Stellglieds, also hier des Einlass-Schließt-Winkels ES oder des Auslass-Schließt-Winkels AS.

Es wird der Korrekturwert variiert, was dazu führt, dass dann dem jeweiligen Schätzwert des Luftmassenstroms MAF_THR, der der jeweiligen Stellung des Stellglieds zugeordnet ist, jeweils ein entsprechend dem Korrekturwert veränderter Schätzwert des Luftmassenstroms MAF_CYL in die Zylinder Z1 bis Z4 in der jeweiligen Stellung des Stellglieds zugeordnet wird, der dann mittels des Beobachters ermittelt wird. Für eine vorgebbare Anzahl an Variationen des Korrekturwertes werden dann die quadratischen Abweichungen der Schätzwerte des Luftmassenstroms MAF_THR und des Luftmassenstroms MAF_CYL in die Zylinder Z1 bis Z4 ermittelt und für jede Variation die Summe dieser quadratischen Fehler gebildet. Diese quadratische Fehlerfunktion wird dann mit Hilfe eines Optimierungsverfahrens minimiert, wobei dabei die ersten und zweiten Korrekturwerte D_ES, D_AS ermittelt werden. Dies erfolgt besonders genau und einfach mittels eines Gradientenverfahrens, bei dem das Optimum schrittweise numerisch berechnet wird. Mit dem Parametervektor

$$b = \begin{pmatrix} D\_ES \\ D\_AS \end{pmatrix}$$

erhält man mit einem iterativen Verfahren

$$b_{n+1} = b_n + k \cdot \sum_i \left( \frac{\partial MAF\_CYL}{\partial b}\Big|_{b_n} \cdot (MAF\_THR_i - MAF\_CYL_i(b_n)) \right)$$

wobei k die Schrittweite ist, die in einer einfachen Ausgestaltung fest vorgegeben ist, bevorzugt aber variabel gewählt wird, und i der Index ist, dessen Wert von eins bis zu dem Maximalwert CTR_MAX beträgt. Die iterative Berechnung wird abgebrochen, wenn eine vorgegebene Anzahl an Berechnungsschritten N überschritten worden ist oder die Änderungen von einem Schritt zum nächsten unterhalb einer vorgegebenen Schwelle liegen.

Die Anwendung dieses Verfahrens führt dazu, dass in einem Berechnungsschritt N jeder Summenbeitrag i jeweils mit einem Schätzwert des Luftmassenstroms MAF_THR in der jeweiligen Stellung des Stellglieds und ein entsprechend dem Korrekturwert veränderter Schätzwert des Luftmassenstroms MAF_CYL in der jeweiligen Stellung des Stellglieds ermittelt wird.

Eine besonders gute Konvergenz ergibt sich dabei, wenn als Gradientenverfahren das sog. Levenbergverfahren angewendet wird.

Die Korrekturwerte D_ES und D AS können auch mittels eines anderen Optimierungsverfahrens ermittelt werden. Derartige mathematische Optimierungsverfahrens sind für Steuerungen und Regelungen beispielsweise aus dem Fachbuch Optimierung: Statische, dynamische, stochastische Verfahren für die Anwendung, Markos Papageorgiou, München; Wien: Oldenburg, 1991, ISBN 3-486-21799-2 bekannt.

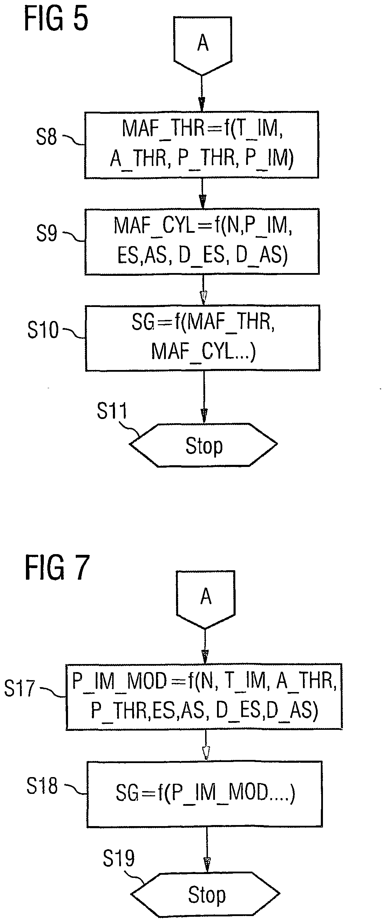

Anschließend wird dann die Bearbeitung in dem auf dem Verknüpfungspunkt A folgenden Schritt fortgesetzt. Dies ist gemäß Figur 5 der Schritt S8, in dem dann der Luftmassenstrom MAF_THR im Ansaugtrakt 1 im Bereich der Drosselklappe 11 entsprechend der in dem Schritt S4 angegebenen Beziehung ermittelt wird.

In einem Schritt S9 wird der Luftmassenstrom MAF_CYL in die Zylinder Z1-Z4 der Brennkraftmaschine mittels der Beobachter-Beziehung entsprechend zu dem Schritt S5 ermittelt, wobei neben den Einlass-Schließt-Winkel ES und Auslass-Schließt-Winkel AS auch die in dem Schritt S7 ermittelten ersten und zweiten Korrekturwerte D_ES und D_AS berücksichtigt werden. Aus diesen Größen können dann auch weitere Schätzgrößen, wie sie in der WO 97/35106 beschrieben sind, ermittelt werden, so z. B. der Saugrohrdruck, der Abgasgegendruck, eine Abgastemperatur und bei vorhandener externer Abgasrückführung ein Restgasmassenstrom in den Sammler 12 des Ansaugtraktes.

In einem Schritt S10 wird dann eine oder mehrere Stellgrößen ermittelt und zwar abhängig von mindestens einer Schätzgröße, wie dem Luftmassenstrom MAF_THR im Ansaugtrakt 1 im Bereich der Drosselklappe 11, dem Massenstrom MAF_CYL in die Zylinder Z1 bis Z4 der Brennkraftmaschine und ggf. auch abhängig von weiteren Messgrößen. Diese Stellgrößen werden dann umgewandelt in entsprechende Stellsignale für die den Stellgliedern der Brennkraftmaschine zugeordneten Stellantriebe. Beispielsweise wird so eine Einspritzzeitdauer für die Kraftstoffeinspritzventile 34, ein Zündwinkel, ein gewünschter Drosselklappenöffnungsgrad oder auch ein gewünschter Einlass-Schließt-Winkel ES oder Auslass-Schließt-Winkel AS für die Gaswechselventile 30, 31 ermittelt.

Alternativ zu dem Schritt S3 kann auch ein Schritt S3a vorgesehen werden, in dem Einlass-Schließt-Winkel ES, und die Ventilüberschneidung VO entsprechend variiert werden. Die Ventilüberschneidung VO ist dabei durch den Kurbelwellenwinkelbereich definiert, in welchem sowohl das Gaseinlassventil 30, als auch das Gasauslassventil 31 geöffnet sind.

In einer weiteren Alternative wird statt des Schritts S3 ein Schritt S3b vorgesehen, in dem Auslass-Schließt-Winkel AS und die Ventilüberschneidung VO entsprechend variiert werden. Für beide Alternativen S3a und S3b werden dann die nachfolgenden Schritte entsprechend angepasst. So wird insbesondere in dem Schritt S7 im Falle der Alternative im Schritt S3a ein zweiter Korrekturwert für die Ventilüberschneidung VO ermittelt und im Falle der Alternative des Schrittes S3b ein erster Korrekturwert für die Ventilüberschneidung ermittelt.

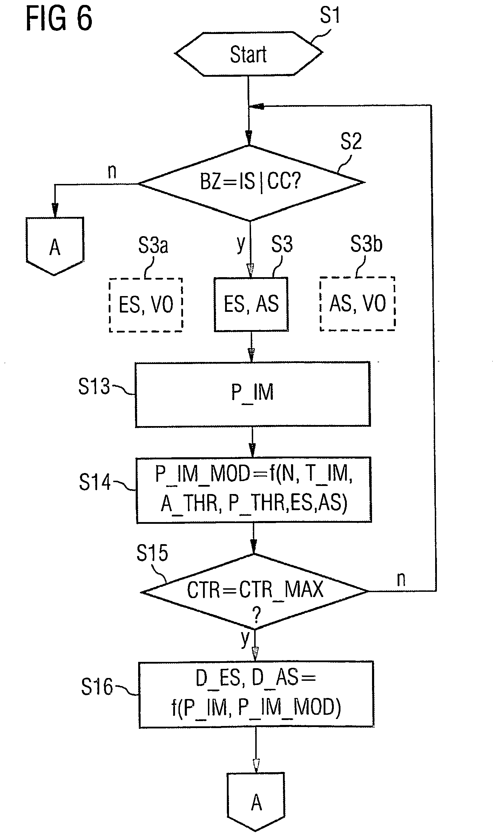

Eine weitere alternative Ausführungsform eines Programms zum Steuern der Brennkraftmaschine wird im Folgenden anhand der Figuren 6 und 7 beschrieben. Dabei werden jedoch nur die Unterschiede zu der in den Figuren 4 und 5 beschriebenen Ausführungsformen erneut beschrieben.

Im Anschluss an den Schritt S3 wird in einem Schritt S13 ein die Messgröße des Saugrohrdrucks P_IM ermittelt. Anschließend wird in einem Schritt S14 eine Schätzgröße P_IM_MOD des Saugrohrdrucks mittels eines Beobachters ermittelt. Dies erfolgt abhängig von der Drehzahl N, der Ansauglufttemperatur T_IM, dem Öffnungsgrad A_THR der Drosselklappe, dem Druck P_THR stromaufwärts der Drosselklappe 11 und dem Einlass-Schließt-Winkel ES und Auslass-Schließt-Winkel AS des Gaseinlassventils 30 bzw. des Gasauslassventils 31 . Die Messgrößen werden der jeweils angesteuerten Stellung des bzw. der ersten Stellglieder zugeordnet und zwischengespeichert.

In einem Schritt S15 wird dann entsprechend zu dem Schritt S6 geprüft, ob der Zähler CTR einen Maximalwert CTR_MAX hat. Ist dies der Fall, so wird die Bearbeitung in einem Schritt S16 fortgesetzt. Dort erfolgt dann mittels eines Optimierungsverfahrens die Berechnung der ersten Korrekturwerte D_ES und zweiten Korrekturwerte D_AS entsprechend dem Schritt S7. Die Bearbeitung wird anschließend in dem auf den Verknüpfungspunkt A folgenden Schritt fortgesetzt, also beispielsweise in dem Schritt S17 (siehe Figur 7), in dem die Schätzgröße P_IM_MOD des Saugrohrdrucks entsprechend dem Schritt S14 ermittelt wird, wobei noch zusätzlich bezüglich des Einlass-Schließt-Winkel ES und Auslass-Schließt-Winkel AS der erste bzw. zweite Korrekturwert D_ES und D_AS berücksichtigt werden.

In dem Schritt S18 wird dann entsprechend dem Schritt S10 eine Stellgröße abhängig von mindestens einer Schätzgröße, wie z. B. der Schätzgröße P_IM_MOD des Saugrohrdrucks ermittelt.

Die vorstehend beschriebenen Programme sind insbesondere für Ventil-Verstellantriebe geeignet, die die Phasenlage der Ventilerhebungskurven im Bezug auf die Kurbelwellenwinkel der Gaseinlass- und Gasauslassventile 30, 31 verändern. Entsprechend angepasste Programme sind jedoch auch anwendbar für Verstellantriebe, die beispielsweise den maximalen Ventilhub verändern und/oder auch die Phasenlage verändern. Dabei sind dann die Korrekturwerte beispielsweise auch auf den maximalen Ventilhub bezogen oder auch auf die Ventilerhebungsdauer bezogen auf den Kurbelwellenwinkel oder Nockenwellenwinkel. Die Programme sind ferner auch entsprechend modifiziert für Stellglieder anwendbar, welche zur Verbesserung der Aufladung stromaufwärts des Gaseinlassventils 30 in dem Einlasskanal oder dem Saugrohr 13 angeordnet sind. Derartige Stellglieder werden beispielsweise als "Impuls-Charger" bezeichnet.

Durch die Berücksichtigung der ersten und zweiten Korrekturwerte sind dann regelmäßig die in den Schritten S9 oder S17 ermittelten Schätzgrößen so präzise, dass auch auf den Luftmassenmesser 14 verzichtet werden kann, wodurch sich die Kosten für die Brennkraftmaschine verringern und gleichzeitig ihr Wirkungsgrad gesteigert wird, da durch den Luftmassenmesser 14 regelmäßig Druckverluste im Ansaugtrakt auftreten. Außerdem kann durch die präzise Berechnung der Schätzgrößen eine entsprechend präzise Zumessung der benötigten Kraftstoffmasse erreicht werden, wodurch die Emissionen der Brennkraftmaschine sehr gering gehalten werden können. Ggf. können mittels der genannten Verfahren die Schätzgrößen so präzise berechnet werden, dass auch auf die Abgassonde 41 verzichtet werden kann und dennoch die vorgeschriebenen Emissionsgrenzwerte durch die Brennkraftmaschine eingehalten werden.

**Patentansprüche**

1.  Verfahren zum Steuern einer Brennkraftmaschine mit einem Ansaugtrakt (1), der mindestens ein Saugrohr (13) hin zu einem Einlasskanal je Zylinder (Z1 bis Z4) der Brennkraftmaschine umfasst, mit mindestens einem Abgaskanal je Zylinder (Z1 bis Z4) der Brennkraftmaschine, mit mindestens einem ersten Stellglied, das in einem Saugrohr (13) oder einem Einlasskanal oder einem Abgaskanal angeordnet ist und den Gaswechsel in dem jeweiligen Zylinder (Z1 bis Z4) beeinflusst, mit weiteren Stellgliedern, die auf die Brennkraftmaschine einwirken und mit Sensoren, die Messgrößen erfassen, bei dem:

    - die Stellung des bzw. der ersten Stellglieder variiert wird und in vorgegebenen angesteuerten Stellungen Messgrößen zum Ermitteln einer ersten und weiteren Schätzgröße erfasst werden, wobei die erste und/oder weitere Schätzgröße abhängig von einem Schätzwert oder einem Messwert der Stellung des bzw. der ersten Stellglieder und einem Korrekturwert für den Schätzwert oder Messwert der Stellung ermittelt werden,
    - ein Optimierungsverfahren durchgeführt wird, mittels dessen Abweichungen der ersten Schätzgröße von der weiteren Schätzgröße für alle vorgegebenen angesteuerten Stellungen minimiert werden durch ein Anpassen des Korrekturwerts für den Schätzwert oder Messwert der Stellung
    - im weiteren Betrieb der Brennkraftmaschine mindestens eine Stellgröße zum Steuern des oder der ersten und/oder der weiteren Stellglieder abhängig von mindestens einer Schätzgröße ermittelt wird, die abhängig von einem Schätzwert oder einem Messwert der Stellung des bzw. der ersten Stellglieder und auch abhängig von dem Korrekturwert für den Schätzwert oder Messwert der Stellung ermittelt wird.

2.  Verfahren nach Anspruch 1, **dadurch gekennzeichnet, dass** die erste Schätzgröße der Luftmassenstrom (MAF_THR) in dem Ansaugtrakt (1) in dem Bereich einer Drosselklappe (11) ist und die weitere Schätzgröße der Luftmassenstrom (MAF_CYL) in die Zylinder (Z1 bis Z4) der Brennkraftmaschine ist.

3.  Verfahren zum Steuern einer Brennkraftmaschine mit einem Ansaugtrakt (1), der mindestens ein Saugrohr (13) hin zu einem Einlasskanal je Zylinder (Z1 bis Z4) der Brennkraftmaschine umfasst, mit mindestens einem Abgaskanal je Zylinder (Z1 bis Z4) der Brennkraftmaschine, mit mindestens einem ersten Stellglied, das in einem Saugrohr (13) oder einem Einlasskanal oder einem Abgaskanal angeordnet ist und den Gaswechsel in dem jeweiligen Zylinder (Z1 bis Z4) beeinflusst, mit weiteren Stellgliedern, die auf die Brennkraftmaschine einwirken und mit Sensoren, die Messgrößen erfassen, bei dem:

    - die Stellung des bzw. der ersten Stellglieder variiert wird und in vorgegebenen angesteuerten Stellungen eine erste Messgröße erfasst wird und mindestens eine weitere Messgröße zum Ermitteln einer weiteren Schätzgröße erfasst wird, wobei die weitere Schätzgröße abhängig von einem Schätzwert oder einem Messwert der Stellung des bzw. der ersten Stellglieder und einem Korrekturwert für den Schätzwert oder Messwert der Stellung ermittelt wird,
    - ein Optimierungsverfahren durchgeführt wird, mittels dessen Abweichungen der ersten Messgröße von der weiteren Schätzgröße für alle vorgegebenen angesteuerten Stellungen minimiert werden durch ein Anpassen des Korrekturwerts für den Schätzwert oder Messwert der Stellung
    - im weiteren Betrieb der Brennkraftmaschine mindestens eine Stellgröße zum Steuern des oder der ersten und/oder der weiteren Stellglieder abhängig von mindestens einer Schätzgröße ermittelt wird, die abhängig von einem Schätzwert oder einem Messwert der Stellung des bzw. der ersten Stellglieder und auch abhängig von dem Korrekturwert für den Schätzwert oder Messwert der Stellung ermittelt wird.

4. Verfahren nach Anspruch 3, **dadurch gekennzeichnet, dass** die erste Messgröße und die weitere Schätzgröße der Druck in dem Ansaugtrakt (1) im Bereich des Sammlers (12) oder eines Saugrohrs (13) sind.

5. Verfahren nach einem der vorstehenden Ansprüche, **dadurch gekennzeichnet, dass** in einem stationären Betriebszustand (BZ) der Brennkraftmaschine die Stellung des bzw. der ersten Stellglieder variiert wird und in den vorgegebenen Stellungen die Messgrößen ermittelt werden.

6. Verfahren nach Anspruch 5, **dadurch gekennzeichnet, dass** der stationäre Betriebszustand der Leerlauf (IS) oder das Schubabschalten (CC) ist.

7. Verfahren nach einem der vorstehenden Ansprüche, **dadurch gekennzeichnet, dass** mittels des Optimierungsverfahrens die Summe der quadratischen Fehler der Abweichungen minimiert wird.

8. Verfahren nach einem der vorstehenden Ansprüche, **dadurch gekennzeichnet, dass** das Optimierungsverfahren ein Gradientenverfahren ist.

9. Verfahren nach einem der vorstehenden Ansprüche, **dadurch gekennzeichnet, dass** das erste Stellglied ein Gaseinlassventil (30) und ein Gasauslassventil (31) sind, deren Stellung charakterisiert ist durch einen Einlass-Schließt-Winkel (ES) und Ventil-Überschneidungswinkel (VO) bezogen auf einen Kurbelwellenwinkel (CRK).

10. Verfahren nach einem der vorstehenden Ansprüche, **dadurch gekennzeichnet, dass** das erste Stellglied ein Gaseinlassventil (30) und ein Gasauslassventil sind, deren Stellung charakterisiert ist durch den Einlass-Schließt-Winkel (ES) und den Auslass-Schließt-Winkel (AS).

**Claims**

1. Method for controlling an internal combustion engine having an air intake tract (1) which comprises at least one inlet pipe (13) leading to an intake duct per cylinder (Z1 to Z4) of the internal combustion engine, with at least one exhaust gas duct per cylinder (Z1 to Z4) of the internal combustion engine, with at least one first actuator which is disposed in an inlet pipe (13) or in an intake duct or in an exhaust gas duct and influences the gas exchange in the respective cylinder (Z1 to 24), with further actuators which act upon the internal combustion engine, and with sensors which record the measured variables, wherein:

   - the position of the first actuator or actuators is varied and, in preset selected positions, measured variables for determining a first and further estimated quantity are recorded, whereby the first and/or further estimated quantity are determined as a function of an estimated value or a reading of the setting of the first actuator or actuators and of an adjustment value for the estimated value or reading of the setting,
   - an optimisation procedure is performed by means of which deviations of the first estimated quantity from the further estimated quantity are minimised for all preset selected positions by modification of the adjustment value for the estimated value or reading of the setting,
   - in the further operation of the internal combustion engine at least one correction variable for controlling the first actuator or actuators and/or the further actuators is determined as a function of at least one estimated quantity which is determined as a function of an estimated value or a reading of the setting of the first actuator or actuators and also as a function of the adjustment value for the estimated value or reading of the setting.

2. The method according to claim 1, **characterised in that** the first estimated quantity of the air mass flow (MAF_THR) in the air intake tract (1) is in the area of a throttle valve (11) and the further estimated quantity is the air mass flow (MAF_CYL) into the cylinders (Z1 to Z4) of the internal combustion engine.

3. A method for controlling an internal combustion engine with an air intake tract (1) which comprises at least one inlet pipe (13) leading to an intake duct per cylinder (Z1 to Z4) of the internal combustion engine, with at least one exhaust gas duct per cylinder (Z1 to Z4) of the internal combustion engine, with at least one first actuator which is disposed in an inlet pipe (13) or in an intake duct or in an exhaust gas duct and influences the gas exchange in the respective cylinder (Z1 to Z4), with further actuators which act upon the internal combustion engine, and with sensors which record the measured variables, wherein:

- the position of the first actuator or actuators is varied and, in preset selected positions, a first measured variable is recorded and at least one further measured variable for determining a further estimated quantity is recorded, whereby the further estimated quantity is determined as a function of an estimated value or a reading of the setting of the first actuator or actuators and of an adjustment value for the estimated value or reading of the setting,
- an optimisation procedure is performed by means of which deviations of the first measured variable from the further estimated quantity are minimised for all preset selected positions by modification of the adjustment value for the estimated value or reading of the setting,
- in the further operation of the internal combustion engine at least one correction variable for controlling the first actuator or actuators and/or the further actuators is determined as a function of at least one estimated quantity which is determined as a function of an estimated value or a reading of the setting of the first actuator or actuators and also as a function of the adjustment value for the estimated value or reading of the setting.

4. The method according to claim 3, **characterised in that** the first measured variable and the further estimated quantity are the pressure in the air intake tract (1) in the area of the collector (12) or of an inlet pipe (13).

5. The method according to one of the preceding claims, **characterised in that** in a steady-state operating mode (BZ) of the internal combustion engine the position of the first actuator or actuators is varied and the measured variables are determined in the preset positions.

6. The method according to claim 5, **characterised in that** the steady-state operating mode is the idle state (IS) or the fuel cut-off in the overrun state (CC).

7. The method according to one of the preceding claims, **characterised in that** by means of the optimisation procedure, the sum of the mean square errors of the deviations is minimised.

8. The method according to one of the preceding claims, **characterised in that** the optimisation procedure is a gradient method.

9. The method according to one of the preceding claims, **characterised in that** the first actuator is a gas inlet valve (30) and a gas outlet valve (31), the position of which is **characterised by** the inlet-closes angle (ES) and valve overlap angle (VO) relative to a crankshaft angle (CRK).

10. The method according to one of the preceding claims, **characterised in that** the first actuator is a gas inlet valve (30) and a gas outlet valve, the position of which is **characterised by** the inlet-closes angle (ES) and the outlet-closes angle (AS).

**Revendications**

1. Procédé pour commander un moteur à combustion interne comprenant une section d'aspiration (1) qui comprend au moins un tuyau d'aspiration (13) qui mène à un canal d'admission par cylindre (Z1 à Z4) du moteur à combustion interne, au moins un canal d'évacuation des gaz par cylindre (Z1 à Z4) du moteur à combustion interne, au moins un premier élément de réglage qui est agencé dans un tuyau d'aspiration (13) ou un canal d'admission ou un canal d'évacuation des gaz et qui influe sur l'échange gazeux dans le cylindre respectif (Z1 à Z4), d'autres éléments de réglage qui agissent sur le moteur à combustion interne, et des capteurs qui enregistrent des grandeurs de mesure, dans lequel procédé :

- la position du ou des premiers éléments de réglage est modifiée et, dans des positions commandées prédéfinies, des grandeurs de mesure sont enregistrées pour déterminer une première et une autre grandeur d'évaluation, dans lequel la première et/ou l'autre grandeur d'évaluation est ou sont déterminées en fonction d'une valeur d'évaluation ou d'une valeur de mesure de la position du ou des premiers éléments de réglage et d'une valeur de correction pour la valeur d'évaluation ou la valeur de mesure de la position,
- un procédé d'optimisation est mis en oeuvre, au moyen duquel les écarts entre la première grandeur d'évaluation et l'autre grandeur d'évaluation sont minimisés pour toutes les positions commandées prédéfinies par un ajustement de la valeur de correction pour la valeur d'évaluation ou la valeur de mesure de la position,

- lors du fonctionnement suivant du moteur à combustion interne, au moins une grandeur de réglage pour la commande du ou des premiers et/ou des autres éléments de réglage est déterminée en fonction d'au moins une grandeur d'évaluation, qui est déterminée en fonction d'une valeur d'évaluation ou d'une valeur de mesure de la position du ou des premiers éléments de réglage et également en fonction de la valeur de correction pour la valeur d'évaluation ou la valeur de mesure de la position.

2. Procédé selon la revendication 1, **caractérisé en ce que** la première grandeur d'évaluation est le débit massique d'air (MAF_THR) dans la section d'aspiration (1) dans la zone d'un clapet de régulation (11) et l'autre grandeur d'évaluation est le débit massique d'air (MAF_CYL) dans les cylindres (Z1 à Z4) du moteur à combustion interne.

3. Procédé pour commander un moteur à combustion interne comprenant une section d'aspiration (1) qui comprend au moins un tuyau d'aspiration (13) qui mène à un canal d'admission par cylindre (Z1 à Z4) du moteur à combustion interne, au moins un canal d'évacuation des gaz par cylindre (Z1 à Z4) du moteur à combustion interne, au moins un premier élément de réglage qui est agencé dans un tuyau d'aspiration (13) ou un canal d'admission ou un canal d'évacuation des gaz et qui influe sur l'échange gazeux dans le cylindre respectif (Z1 à Z4), d'autres éléments de réglage qui agissent sur le moteur à combustion interne, et des capteurs qui enregistrent des grandeurs de mesure, dans lequel procédé :

- la position du ou des premiers éléments de réglage est modifiée et, dans des positions commandées prédéfinies, une première grandeur de mesure est enregistrée et au moins une autre grandeur de mesure est enregistrée pour déterminer une autre grandeur d'évaluation, dans lequel l'autre grandeur d'évaluation est déterminée en fonction d'une valeur d'évaluation ou d'une valeur de mesure de la position du ou des premiers éléments de réglage et d'une valeur de correction pour la valeur d'évaluation ou la valeur de mesure de la position,
- un procédé d'optimisation est mis en oeuvre, au moyen duquel les écarts entre la première grandeur de mesure et l'autre grandeur d'évaluation sont minimisés pour toutes les positions commandées prédéfinies par un ajustement de la valeur de correction pour la valeur d'évaluation ou la valeur de mesure de la position,
- lors du fonctionnement suivant du moteur à combustion interne, au moins une grandeur de réglage pour la commande du ou des premiers et/ou des autres éléments de réglage est déterminée en fonction d'au moins une grandeur d'évaluation, qui est déterminée en fonction d'une valeur d'évaluation ou d'une valeur de mesure de la position du ou des premiers éléments de réglage et également en fonction de la valeur de correction pour la valeur d'évaluation ou la valeur de mesure de la position.

4. Procédé selon la revendication 3, **caractérisé en ce que** la première grandeur de mesure et l'autre grandeur d'évaluation sont la pression dans la section d'aspiration (1) dans la zone du collecteur (12) ou d'un tuyau d'aspiration (13).

5. Procédé selon l'une quelconque des revendications précédentes, **caractérisé en ce que**, dans un état de fonctionnement (BZ) stationnaire du moteur à combustion interne, la position du ou des premiers éléments de réglage est modifiée et les grandeurs de mesure sont déterminées dans les positions prédéfinies.

6. Procédé selon la revendication 5, **caractérisé en ce que** l'état de fonctionnement stationnaire est le fonctionnement à vide (IS) ou la coupure d'alimentation en poussée (CC).

7. Procédé selon l'une quelconque des revendications précédentes, **caractérisé en ce que** la somme des erreurs quadratiques des écarts est minimisée au moyen du procédé d'optimisation.

8. Procédé selon l'une quelconque des revendications précédentes, **caractérisé en ce que** le procédé d'optimisation est un procédé à gradient.

9. Procédé selon l'une quelconque des revendications précédentes, **caractérisé en ce que** le premier élément de réglage est une soupape d'admission de gaz (30) et une soupape d'échappement de gaz (31), dont la position est **caractérisée par** un angle de fermeture à l'admission (ES) et un angle de chevauchement des soupapes (VO) par rapport à un angle de vilebrequin (CRK).

10. Procédé selon l'une quelconque des revendications précédentes, **caractérisé en ce que** le premier élément de réglage est une soupape d'admission de gaz (30) et une soupape d'échappement de gaz, dont la position est **caractérisée par** l'angle de fermeture à l'admission (ES) et l'angle de fermeture à l'échappement (AS).

# FIG 1

EP 1 481 153 B1

# FIG 2

# FIG 3

CRK

# FIG 4

Start — S1

S2: BZ = IS | CC?

n → A

y → S3: ES, AS

S3a: ES, VO

S3b: AS, VO

S4: MAF_THR = f(T_IM, A_THR, P_THR, P_IM)

S5: MAF_CYL = f(N, P_IM, ES, AS)

S6: CTR = CTR_MAX ?

n → (loop back)

y → S7: D_ES, D_AS = f(MAF_THR, MAF_CYL)

A

## FIG 5

A

S8 — MAF_THR=f(T_IM, A_THR, P_THR, P_IM)

S9 — MAF_CYL=f(N,P_IM, ES,AS, D_ES, D_AS)

S10 — SG=f(MAF_THR, MAF_CYL...)

S11 — Stop

## FIG 7

A

S17 — P_IM_MOD=f(N, T_IM, A_THR, P_THR,ES,AS, D_ES,D_AS)

S18 — SG=f(P_IM_MOD....)

S19 — Stop

# FIG 6

```
                                                    S1
                        ┌─────────────────────┐  ╱
                        │        Start        │
                        └─────────────────────┘
                                   │
                                   ▼                S2
            n            ╱◇─────────────────◇╲    ╱
         ◄───────────────   BZ=IS│CC?          ◄──────────┐
         │               ╲◇─────────────────◇╱           │
         ▼                         │ y                    │
      ┌─────┐                      │                      │
      │  A  │    S3a           S3  │        S3b           │
      └─────┘    ╱              ╱  │        ╱             │
              ┌ ─ ─ ─ ┐  ┌──────────┐  ┌ ─ ─ ─ ┐         │
              │ ES, VO│  │  ES, AS  │  │ AS, VO│         │
              └ ─ ─ ─ ┘  └──────────┘  └ ─ ─ ─ ┘         │
                              │                           │
              S13             ▼                           │
               ╲     ┌─────────────────────┐             │
                 ─── │        P_IM          │             │
                     └─────────────────────┘             │
                              │                           │
                              ▼                           │
              S14    ┌─────────────────────┐             │
               ╲     │  P_IM_MOD=f(N, T_IM, │             │
                 ─── │  A_THR, P_THR,ES,AS) │             │
                     └─────────────────────┘             │
                              │                           │
              S15             ▼                    n      │
               ╲     ╱◇─────────────────◇╲   ───────────┘
                 ─── │   CTR=CTR_MAX        │
                     ╲◇─────────────────◇╱
                              │ ?
                              │ y
              S16             ▼
               ╲     ┌─────────────────────┐
                 ─── │   D_ES, D_AS=        │
                     │  f(P_IM, P_IM_MOD)   │
                     └─────────────────────┘
                              │
                              ▼
                           ┌─────┐
                           │  A  │
                           └─────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9735106 A

**In der Beschreibung aufgeführte Nicht-Patentliteratur**

- Optimierung: Statische, dynamische, stochastische Verfahren für die Anwendung. Markos Papageorgiou, München; Wien: Oldenburg. 1991